(19) Europäisches Patentamt / European Patent Office / Office européen des brevets

(11) **EP 3 051 434 A1**

(12) **EUROPEAN PATENT APPLICATION**
published in accordance with Art. 153(4) EPC

(43) Date of publication:
**03.08.2016 Bulletin 2016/31**

(51) Int Cl.:
*G06F 17/30* $^{(2006.01)}$

(21) Application number: **13894750.2**

(86) International application number:
**PCT/CN2013/088625**

(22) Date of filing: **05.12.2013**

(87) International publication number:
**WO 2015/043068 (02.04.2015 Gazette 2015/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.09.2013 CN 201310456247**

(71) Applicants:
- **Peking University Founder Group Co., Ltd Beijing 100871 (CN)**
- **Founder Apabi Technology Limited Beijing 100089 (CN)**

- **Peking University Beijing 100871 (CN)**

(72) Inventors:
- **YE, Mao Beijing 100089 (CN)**
- **TANG, Zhi Beijing 100089 (CN)**
- **XU, Jianbo Beijing 100089 (CN)**

(74) Representative: **Dantz, Jan Henning Loesenbeck - Specht - Dantz Patent- und Rechtsanwälte Am Zwinger 2 33602 Bielefeld (DE)**

(54) **METHOD AND SYSTEM FOR MEASUREMENT OF KNOWLEDGE POINT RELATIONSHIP STRENGTH**

(57) The present invention provides a method and system of measuring knowledge point relationship strength, the method comprising calculating explicit relationship strength for all knowledge points and generating a knowledge point relationship strength matrix M; constructing a weighted and directed graph G according to the knowledge point relationship strength matrix of all knowledge points; calculating knowledge point implicit relationship strength values according to the weighted and directed graph and generating a knowledge point implicit relationship strength matrix I; traversing the knowledge point implicit relationship strength matrix I and updating the knowledge point relationship strength matrix M. The above technical solution may effectively avoid the problem of lack of an absolute measurable value for the determination of relationship strength, incorrect measurement of relationship strength, or unable to discover some stronger relationship strength in the prior art.

S1 — calculating explicit relationship strength values for all knowledge points and generating a knowledge point relationship strength matrix M

S2 — constructing a weighted and directed graph G according to the knowledge point relationship strength matrix of all knowledge points

S3 — calculating knowledge point implicit relationship strength values according to the weighted and directed graph and generating a knowledge point implicit relationship strength matrix I

S4 — traversing the knowledge point implicit relationship strength matrix I and updating the knowledge point relationship strength matrix M

FIG. 1

EP 3 051 434 A1

**Description**

TECHNICAL FIELD

This invention relates a method and a system for measurement of knowledge point relationship strength, and belongs to the field of electric digital data processing.

DESCRIPTION OF THE RELATED ART

Along with the arrival of knowledge-based economy, digital publication has become an inevitable trend in the publication industry. Many people have shifted from paper reading to electronic reading. A variety of publication resources such as electric books, magazines, digital newspapers contain a lot of authoritative knowledge and have high application value. These digital publication resources commonly spread knowledge and information in the form of documents and articles of books or magazines. What desired by readers is directly obtaining relative knowledge points from these documents, but not the documents themselves, that is, finding out all relative knowledge points in the art for the purpose of research and study.

Knowledge points in the same field have association relationships therebetween. Relationships that can be discovered directly from knowledge points and their explanations in the same text are referred to as "explicit relationships", and relationships that can be discovered indirectly from knowledge points and their explanations in different text are referred to as "implicit relationships". Encyclopedias as a digital publication resource comprise concise summaries of knowledge points. Knowledge points in encyclopedias (entries) describe names and explanations of knowledge points, wherein some other relative knowledge points are generally mentioned in the explanation portion. For example, in the encyclopedia ≪Encyclopedia of China - History of China≫, a knowledge point "Qin ShiHuang" is explained as "The First Emperor of Qin Dynasty who unified China....He removed Lv Buwei from the prime minister's Office, and made him move to Sichuan province......In thirty-four years of Qin Shihuang, He adopted the advice of the prime minister Li Si......." (some contents are omitted as represented by "..."). It can be learned from the explanation that knowledge point "Qin ShiHuang" has an association relationship with knowledge point "Lv Buwei". Similarly, knowledge point "Qin ShiHuang" has an association relationship with knowledge point "Li Si". These relationships are explicit relationships present between knowledge points and their explanations. However, in addition to explicit relationships, a plurality of implicit relationships may be present indirectly therebetween and implicit relationships may be more representative than explicit relationships. Therefore, it is necessary to further dig implicit relationships between knowledge points based on explicit relationships of knowledge points, so that better measurements of knowledge point relationship strength may be obtained on the basis of comprehensive consideration of explicit relationships and implicit relationships between knowledge points.

In the prior art, the method of measuring knowledge point relationship strength comprises: calculating explicit relationship strength values between knowledge points; calculating a relationship strength ratio between knowledge points; calculating implicit relationship strength values between knowledge points according to the explicit relationship strength values between knowledge points and the relationship strength ratio between knowledge points; then calculating knowledge point relationship strength values. In the above method, the value of knowledge point relationship strength is measured according to the number of times each knowledge point appears in its relative text. The maximum value of relationship strength cannot be obtained using this method, causing lack of an absolute measurable value for the determination of relationship strength. Meanwhile, implicit relationship is obtained according to relationship strength between indirect knowledge points and a relationship strength ratio, wherein the relationship strength ratio is a radio of an explicit relationship strength value of a knowledge point to the sum of relationship strength values of all related knowledge points. This method of obtaining implicit relationship strength merely obtains implicit relationships between knowledge points in a relative manner, instead of analyzing all implicit relationships in a knowledge system from a perspective of the whole knowledge system. Further, a stronger relationship caused by another indirect knowledge point is generated between two knowledge points; it cannot be found using the method of counting the number of times each knowledge point appears in its related text. Thus, it is desirable to measure relationship strength of knowledge points from a perspective of the whole knowledge system.

SUMMARY OF THE INVENTION

A technical problem to be solved in this invention is at least one of lack of an absolute measurable value for the determination of relationship strength, incorrect measurement of relationship strength, and unable to discover some stronger relationship strength in the prior art. In order to measure relationship strength from a perspective of the whole knowledge system, adopting an absolute measurable value for the determination of relationship strength, a method and system for measuring knowledge point relationship strength is provided.

In order to solve the above technical problem, this disclosure provides the following technical solutions.

A method for measuring knowledge point relationship strength, comprising the following steps: calculating explicit relationship strength values for all knowledge points and generating a knowledge point relationship strength matrix M; constructing a weighted and directed graph G according to the knowledge point relationship strength matrix of all knowledge points; calculating knowledge point implicit relationship strength values according to the weighted and directed graph and generating a knowledge point implicit relationship strength matrix I; traversing the knowledge point implicit relationship strength matrix I and updating the knowledge point relationship strength matrix M.

Optionally, calculating explicit relationship strength values for all knowledge points and generating a knowledge point relationship strength matrix M comprises the following steps: calculating knowledge point forward explicit relationship strength values; calculating knowledge point backward explicit relationship strength values; calculating knowledge point explicit relationship strength values according to the knowledge point forward explicit relationship strength values and the knowledge point backward explicit relationship strength values; according to the knowledge point explicit relationship strength values, generating a knowledge point relationship strength matrix M.

Optionally, the calculation method of knowledge point forward explicit relationship strength values is:

$$f_P(i, j) = \frac{2}{1 + \exp(-\beta\mu)} - 1$$

Wherein, $f_p(i,j)$ is the forward explicit relationship strength value from knowledge point $o_i$ to knowledge point $o_j$, $\mu$ is the number of times knowledge point $o_j$ appears in related text of knowledge point $o_i$, $\beta$ is a control factor, $0.5 \leq \beta \leq 2$, i,j are non-negative integers, i, j = 1,2, ..., n, n is the number of knowledge points.

Optionally, the calculation method of knowledge point backward explicit relationship strength values is:

$$f_N(i, j) = \frac{f_P(j,i)}{\alpha}$$

Wherein, $f_N(i,j)$ is the backward explicit relationship strength from knowledge point $o_i$ to knowledge point $o_j$, $\alpha$ is an association factor, $1 \leq \alpha \leq 5$, $\alpha$ is a positive integer; $f_p(j, i)$ the is forward explicit relationship strength value from knowledge point $o_j$ to knowledge point $o_i$.

Optionally, the calculation method of knowledge point explicit relationship strength values is:

$$f_E(i, j) = \frac{\alpha(f_P(i, j) + f_N(i, j))}{1 + \alpha}$$

Wherein, $f_E(i, j)$ is the explicit relationship strength value from knowledge point $o_i$ to knowledge point $o_j$, $f_p(i,j)$ is the forward explicit relationship strength value from knowledge point $o_i$ to knowledge point $o_j$, $f_N(i,j)$ is the backward explicit relationship strength value from knowledge point $o_i$ to knowledge point $o_j$, $\alpha$ is an association factor, $1 \leq \alpha \leq 5$, and $\alpha$ is a positive integer.

Optionally, the weighted and directed graph G comprises edges, weights and vertices. Wherein, the method of setting edges and weights comprises: if $M_{ij} > 0$, a weight of an edge from knowledge point $o_i$ to knowledge point $o_j$ in the weighted and directed graph G is set to $-\ln(M_{ij})$; if $M_{ij} = 0$, there is an edge from knowledge point $o_i$ to knowledge point $o_j$ in the weighted and directed graph G, wherein $M_{ij}$ represents explicit relationship strength from knowledge point $o_i$ to knowledge point $o_j$; the vertices of the weighted and directed graph G are the same as the vertices in M.

Optionally, the weighted and directed graph G is represented as a matrix.

Optionally, the calculation method of knowledge point implicit relationship strength values is:

$$f_I(i, j) = \exp(-C_{ij})$$

Wherein, $f_I(i, j)$ is the implicit relationship strength value from knowledge point $o_i$ to knowledge point $o_j$, $C_{ij}$ represents the shortest simple path length from knowledge point $o_i$ to knowledge point $o_j$ in the weighted and directed graph G; if there is not a simple path from knowledge point $o_i$ to knowledge point $o_j$, $f_I(i, j) = 0$; the value of implicit relationship strength from a knowledge point to itself is set to 0; values of implicit relationship strength $f_I(i, j)$ are stored in a matrix to generate a knowledge point implicit relationship strength matrix I.

Optionally, the process of traversing the knowledge point implicit relationship strength matrix I and updating the knowledge point relationship strength matrix M comprises the following steps: traversing each element of the implicit relationship strength matrix I; determining whether $I_{ij}$ is larger than $M_{ij}$; if $I_{ij} > M_{ij}$, reassigning $M_{ij}$ as $M_{ij} = I_{ij}$ and proceeding to the next element of the implicit relationship strength matrix I after updating the knowledge point relationship strength matrix M; if $I_{ij} < M_{ij}$, proceeding to the next element of the implicit relationship strength matrix I directly, until all elements of the implicit relationship strength matrix I are traversed.

Optionally, the shortest simple path length $C_{ij}$ is calculated using a Dijkstra algorithm, a SPFA algorithm, a Floyd-Warshall algorithm or a Bellman-Ford algorithm.

Optionally, the control factor $\beta = 1$ or the association factor $\alpha = 2$.

According to another aspect of this invention, a system for measuring knowledge point relationship strength is provided, comprising: a knowledge point relationship strength matrix generation module for calculating explicit relationship strength values for all knowledge points and generating a knowledge point relationship strength matrix M; a weighted and directed graph construction module for constructing a weighted and directed graph G according to the knowledge point relationship strength matrix of all knowledge points; a knowledge point implicit relationship strength matrix generation module for calculating knowledge point implicit relationship strength values according to the weighted and directed graph and generating a knowledge point implicit relationship strength matrix I; an update module for traversing the knowledge point implicit relationship strength matrix I and updating the knowledge point relationship strength matrix M.

Optionally, the knowledge point relationship strength generation module comprises a forward explicit relationship strength calculation unit for calculating knowledge point forward explicit relationship strength values; a backward explicit relationship strength calculation unit for calculating knowledge point backward explicit relationship strength values; an explicit relationship strength calculation unit for calculating knowledge point explicit relationship strength values according to the knowledge point forward explicit relationship strength values and the knowledge point backward explicit relationship strength values; a knowledge point relationship strength matrix generation unit for, according to the knowledge point explicit relationship strength values, generating a knowledge point relationship strength matrix M.

Optionally, the calculation method of knowledge point forward explicit relationship strength values is:

$$f_P(i,j) = \frac{2}{1+\exp(-\beta\mu)} - 1$$

Wherein, $f_p(i,j)$ is the forward explicit relationship strength value from knowledge point $o_i$ to knowledge point $o_j$, $\mu$ is the number of times knowledge point $o_j$ appears in related text of knowledge point $o_i$, $\beta$ is a control factor, $0.5 \leq \beta \leq 2$, i,j are non-negative integers, i, j = 1,2, ..., n, n is the number of knowledge points.

Optionally, the calculation method of knowledge point backward explicit relationship strength values is:

$$f_N(i,j) = \frac{f_P(j,i)}{\alpha}$$

Wherein, $f_N(i,j)$ is the backward explicit relationship strength value from knowledge point $o_i$ to knowledge point $o_j$, $\alpha$ is an association factor, $1 \leq \alpha \leq 5$, $\alpha$ is a positive integer; $f_p(j, i)$ is the forward explicit relationship strength value from knowledge point $o_j$ to knowledge point $o_i$.

Optionally, the calculation method of knowledge point explicit relationship strength values is:

$$f_E(i,j) = \frac{\alpha(f_P(i,j) + f_N(i,j))}{1+\alpha}$$

Wherein, $f_E(i, j)$ is the explicit relationship strength value from knowledge point $o_i$ to knowledge point $o_j$, $f_p(i,j)$ is the forward explicit relationship strength value from knowledge point $o_i$ to knowledge point $o_j$, $f_N(i,j)$ is backward explicit relationship strength from knowledge point $o_i$ to knowledge point $o_j$, $\alpha$ is an association factor, $1 \leq \alpha \leq 5$, and $\alpha$ is a positive integer.

Optionally, the weighted and directed graph G comprises edges, weights and vertices. Wherein, the method of setting edges and weights comprises: if $M_{ij} > 0$, a weight of an edge from knowledge point $o_i$ to knowledge point $o_j$ in the weighted and directed graph G is set to $-\ln(M_{ij})$; if $M_{ij} = 0$, there is an edge from knowledge point $o_i$ to knowledge point $o_j$ in the weighted and directed graph G, wherein $M_{ij}$ represents explicit relationship strength from knowledge point $o_i$ to knowledge point $o_j$; the vertices of the weighted and directed graph G are the same as the vertices in M.

Optionally, the weighted and directed graph G is represented as a matrix.

Optionally, the calculation method of knowledge point implicit relationship strength values is:

$$f_I(i, j) = \exp(-C_{ij})$$

Wherein, $f_I(i, j)$ is the implicit relationship strength value from knowledge point $o_i$ to knowledge point $o_j$, $C_{ij}$ represents the shortest simple path length from knowledge point $o_i$ to knowledge point $o_j$ in the weighted and directed graph G; if there is not a simple path from knowledge point $o_i$ to knowledge point $o_j$, $f_I(i,j) = 0$; the value of implicit relationship strength from a knowledge point to itself is set to 0; values of implicit relationship strength $f_I(i, j)$ are stored in a matrix to generate a knowledge point implicit relationship strength matrix I.

Optionally, the update module comprises: a search unit for traversing each element of the implicit relationship strength matrix I; a determination unit for determining whether $I_{ij}$ is larger than $M_{ij}$; an update unit for, if $I_{ij} > M_{ij}$, reassigning $M_{ij}$ as $M_{ij} = I_{ij}$ and proceeding to the next element of the implicit relationship strength matrix I after updating the knowledge point relationship strength matrix M; if $I_{ij} < M_{ij}$, proceeding to the next element of the implicit relationship strength matrix I directly, until all elements of the implicit relationship strength matrix I are traversed.

Optionally, the shortest simple path length $C_{ij}$ is calculated using a Dijkstra algorithm, a SPFA algorithm, a Floyd-Warshall algorithm or a Bellman-Ford algorithm.

Optionally, the control factor $\beta$ = 1 or the association factor $\alpha$=2.

The above technical solutions of this disclosure have one or more of the following advantages over the prior art.

(1) In an embodiment of this disclosure, the method of measuring knowledge point relationship strength comprises calculating explicit relationship strength values for all knowledge points and generating a knowledge point relationship strength matrix M; constructing a weighted and directed graph G according to the knowledge point relationship strength matrix of all knowledge points; calculating knowledge point implicit relationship strength values according to the weighted and directed graph and generating a knowledge point implicit relationship strength matrix I; traversing the knowledge point implicit relationship strength matrix I and updating the knowledge point relationship strength matrix M. The method of measuring knowledge point relationship strength may effectively avoid the problem of lack of an absolute measurable value for the determination of relationship strength, incorrect measurement of relationship strength, or unable to discover some stronger relationship strength in the prior art.

(2) In the method of measuring knowledge point relationship strength according to an embodiment of this disclosure, knowledge point relationship strength is evaluated effectively through measuring relationship strength of knowledge points in a global space and mapping the relationship strength values of knowledge points into a range [0, 1), in which it is easier to determine the strength level of knowledge point relationship strength.

(3) In the method of measuring knowledge point relationship strength according to an embodiment of this disclosure, a knowledge point explicit relationship strength value is obtained through calculating forward explicit relationship strength values and backward explicit relationship strength values, and this bidirectional relationship strength evaluation method may further improve the accuracy of explicit relationship strength.

(4) In the method of measuring knowledge point relationship strength according to an embodiment of this disclosure, the explicit relationship matrix is converted to a weighted and directed graph to facilitate the calculation of the shortest distance between knowledge points, which also simplifies the implementation of the algorithm and improves computing efficiency.

(5) In the method of measuring knowledge point relationship strength according to an embodiment of this disclosure, explicit relationship strength values and implement relationship strength values are calculated using an exponential function and a logarithmic function, a mathematic model is established based on characteristics of those functions and the relationship therebetween, which is advantageous in terms of ingenious conception, simple algorithm and easy implementation.

(6) In the method of measuring knowledge point relationship strength according to an embodiment of this disclosure, explicit relationship strength values and implicit relationship strength values are stored in an explicit relationship strength matrix and an implicit relationship strength matrix respectively, and may be accessed conveniently in calculation, which may further improve computing speed.

(7) In the method of measuring knowledge point relationship strength according to an embodiment of this disclosure, a Dijkstra algorithm is used as the method of calculating the shortest simple path length, which is advantageous in terms of fast computing speed, the capability of fast search and improved response speed.

(8) In the method of measuring knowledge point relationship strength according to an embodiment of this disclosure, a SPFA algorithm is used as the method of calculating the shortest simple path length; this algorithm maintains a queue and source knowledge points are inserted into the queue when the queue is initialized. A knowledge point is taken out of the queue each time to relax its adjacent points; if an adjacent point is relaxed successfully, it is inserted into the queue. The algorithm terminates when the queue is empty. This algorithm is simple, has fast computing speed, and may improve response speed.

(9) In the method of measuring knowledge point relationship strength according to an embodiment of this disclosure, a Floyd-Warshall algorithm is used as the method of calculating the shortest simple path length; with this algorithm, the shortest path between any two points may be calculated; this algorithm may be used in any graphs, including directed graphs, graphs having negative weighted edges, and may obtain the shortest path through finding the shortest sub-paths. This algorithm may be implemented easily, has fast computing speed and improved response speed.

(10) In the method of measuring knowledge point relationship strength according to an embodiment of this disclosure, a Bellman-Ford algorithm is used as the method of calculating the shortest simple path length; this algorithm is suitable for single-source shortest path calculation and is easy to program and implement.

(11) In the method of measuring knowledge point relationship strength according to an embodiment of this disclosure, a control factor $\beta$ is set for the calculation of forward explicit relationship strength. Through setting a control factor $\beta$, the influence on explicit relationship strength caused by the value of $\mu$ may be effectively controlled; the value of the control factor $\beta$ is selected according to the characteristic of the set of knowledge points to find a control factor $\beta$ for optimization. In general, a good effect may be achieved when the control factor $\beta$ is set to 1.

(12) In the method of measuring knowledge point relationship strength according to an embodiment of this disclosure, an association factor $\alpha$ is set for the calculation of backward explicit relationship strength. Through setting the association factor $\alpha$, the influence on backward explicit relationship caused forward explicit relationship may be effectively controlled; $1 \leq \alpha \leq 5$, and different values may be selected according to the characteristic of the set of knowledge points. In general, a better effect may be achieved when the association factor $\alpha$ is set to 2.

(13) In the system of measuring knowledge point relationship strength according to an embodiment of this disclosure, through using the method of measuring knowledge point relationship strength of this invention, the problem of lack of an absolute measurable value for the determination of relationship strength, incorrect measurement of relationship strength, or unable to discover some stronger relationship strength in the prior art may be effectively avoided.

BRIEF DESCRIPTION OF THE DRAWINGS

For an easier and clear understanding of this invention, a further description of this invention will be given below with reference to the accompanying drawings, in which:

Fig.1 is a flowchart of a method of measuring knowledge point relationship strength according to an embodiment of this invention;
Fig.2 is a diagram of an example of the weighted and directed graph of this invention;
Fig.3 is a structural diagram of a system of measuring knowledge point relationship strength according to an embodiment of this invention.

DETAILED DESCRIPTION OF THE PREFERRED EMBODIMENT

Embodiment 1

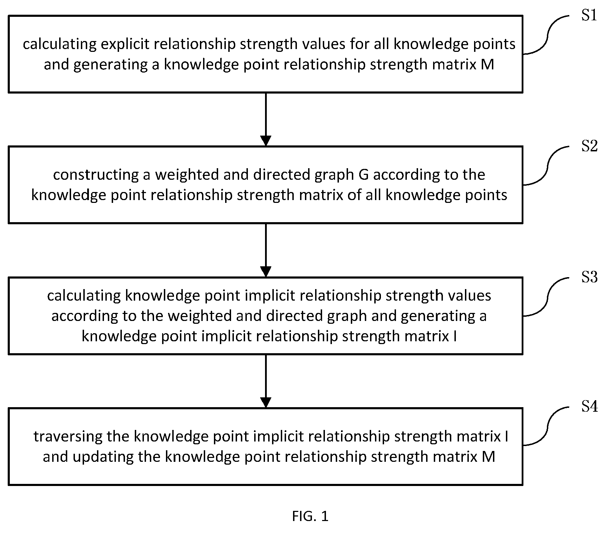

Fig.1 shows a flowchart of a method of measuring knowledge point relationship strength according to an embodiment of this invention. In this embodiment, knowledge points are knowledge interaction units, representing concepts or entities, such as "Qin Shi Huang", "Tang Dynasty", "Hundred Days' Reform". In this embodiment, names of knowledge points and their related text are shown in Table 1 below. As shown in Table 1, there are three knowledge points, which are labeled as A, B and C for the convenience of description. N is a block of text that does not include the names of knowledge points A, B and C.

Table 1. Names of knowledge points and their related text

| Names of knowledge points | Related text |
| --- | --- |
| A | NANBNBN |
| B | NANCN |
| C | NNN |

The method of measuring knowledge point relationship strength comprises the following steps:

S1: calculating explicit relationship strength values for all knowledge points and generate a knowledge point relationship strength matrix M.

In an embodiment, the step S1 comprises the following steps:

S11: calculating knowledge point forward explicit relationship strength values, wherein the knowledge point forward explicit relationship strength value is calculated as:

$$f_P(i,j) = \frac{2}{1+\exp(-\beta\mu)} - 1$$

Wherein, $f_p(i,j)$ is the forward explicit relationship strength value from knowledge point $o_i$ to knowledge point $o_j$, $\mu$ is the number of times knowledge point $o_j$ appears in the related text of knowledge point $o_i$, $\beta$ is a control factor, $0.5 \leq \beta \leq 2$, i,j are non-negative integers, i,j = 1,2, ... n, n is the number of knowledge points.

In this embodiment, the control factor $\beta$ is set to 1. In other embodiment, the control factor $\beta$ may be set to different values, such as 0.5, 0.7, 1.2, 1.5. The control factor $\beta$ controls the influence of the value of $\mu$ on explicit relationship strength. Users may select the value of the control factor $\beta$ according to the characteristic of knowledge points in a field and may find an optimal control factor $\beta$ according to the characteristic of knowledge points in a field.

As shown in Table 1, knowledge point B appears two times in the related text of knowledge point A, forward explicit relationship strength $f_p(A,B)$ from knowledge point A to knowledge point B is:

$$f_P(A,B) = \frac{2}{1+\exp(-\beta\mu)} - 1 = \frac{2}{1+\exp(-2)} - 1$$

S12: calculating knowledge point backward explicit relationship strength values, wherein the knowledge point backward explicit relationship strength value is calculated as:

$$f_N(i,j) = \frac{f_P(j,i)}{\alpha}$$

Wherein, $f_N(i,j)$ is the backward explicit relationship strength value from knowledge point $o_i$ to knowledge point $o_j$, $\alpha$ is an association factor, $1 \leq \alpha \leq 5$, $\alpha$ is a positive integer; $f_p(j,i)$ is the forward explicit relationship strength value from knowledge point $o_j$ to knowledge point $o_i$.

In this embodiment, the association factor $\alpha$ is set to 2. In other embodiments, the association factor $\alpha$ may be set to different values, such as 1, 1.5, 3, 4, 5. The association factor $\alpha$ controls the influence of forward explicit relationship strength on backward explicit relationship strength, the smaller value of $\alpha$, the greater influence caused by forward explicit relationship strength on backward explicit relationship strength, and the larger value of $\alpha$, the smaller influence caused by forward explicit relationship strength on backward explicit relationship strength.

In Table 1, the backward explicit relationship strength $f_N(A,B)$ from knowledge point A to knowledge point B is:

$$f_N(A,B) = \frac{f_P(B,A)}{\alpha} = (\frac{2}{1+\exp(-1)} - 1)/2$$

S13: calculating knowledge point explicit relationship strength values according to knowledge point forward explicit relationship strength values and knowledge point backward explicit relationship strength values, wherein the knowledge point explicit relationship strength value is calculated as follows:

$$f_E(i,j) = \frac{\alpha(f_P(i,j) + f_N(i,j))}{1+\alpha}$$

Wherein, $f_E(i,j)$ is the explicit relationship strength value from knowledge point $o_i$ to knowledge point $o_j$, $f_p(i,j)$ is the forward explicit relationship strength value from knowledge point $o_i$ to knowledge point $o_j$, $f_N(i,j)$ is the backward explicit relationship strength value from knowledge point $o_i$ to knowledge point $o_j$, $\alpha$ is an association factor, $1 \leq a \leq 5$, and $\alpha$ is a positive integer.

If there is not an explicit relationship from knowledge point $o_i$ to knowledge point $o_j$, $E_{ij}$ is zero. In this embodiment, the explicit relationship strength value from a knowledge point to itself is set to 0. In other embodiments, the explicit relationship strength value from a knowledge point to itself may be set to 1, which however does not have a practical meaning.

In Table 1, explicit relationship strength f (A,B) from knowledge point A to knowledge point B is:

$$f_E(A,B) = \frac{\alpha(f_P(A,B) + f_N(A,B))}{1+\alpha} = \frac{2(f_P(A,B) + f_N(A,B))}{1+2} = 0.6617684897238464$$

Explicit relationship strength values between knowledge point A, knowledge point B and knowledge point C are calculated in sequence according to step S11 to step S13.

With the method of measuring knowledge point relationship strength of this embodiment, knowledge point explicit relationship strength is obtained through calculating forward explicit relationship strength values and backward explicit relationship strength values, and this bidirectional relationship strength evaluation method may further improve the accuracy of explicit relationship strength.

S14: generating a knowledge point relationship strength matrix M according to the explicit relationship strength values of all knowledge points.

As shown in Table 2, a knowledge point relationship strength matrix M (in which explicit relationship strength values are stored at this point) is generated according to the explicit relationship strength values between knowledge points A, B and C shown in Table 1.

Table 2. Knowledge point relationship strength matrix M (with explicit relationship strength values stored therein)

|   | A | B | C |
|---|---|---|---|
| A | 0 | 0.6617684897238464 | 0 |
| B | 0.5619428234919281 | 0 | 0.30807810484000653 |
| C | 0 | 0.1540390524200032 6 | 0 |

S2: constructing a weighted and directed graph G according to the knowledge point relationship strength matrix G.

The weighted and directed graph G comprises edges, weights and vertices.

Wherein, edges and weights are set in the following method.

If $M_{ij}>0$, the weight of an edge from knowledge point $o_i$ to knowledge point $o_j$ is set to $-\ln(M_{ij})$; if $M_{ij}=0$, there is not an edge from knowledge point $o_i$ to knowledge point $o_j$ in G, wherein $M_{ij}$ represents explicit relationship strength from knowledge point $o_i$ to knowledge point $o_j$;

The weighted and directed graph G has the same vertices with M. In this invention, the explicit relationship matrix is converted to a weighted and directed graph to facilitate the calculation of the shortest distance between knowledge points, which also simplifies the implementation of the algorithm and improves computing efficiency. The weighted and directed graph G in this embodiment is represented as a matrix. A weighted and directed graph G constructed based on the knowledge point relationship strength matrix shown in Table 2 is shown in Table 3.

Table 3. Weighted and directed graph G

|   | A | B | C |
|---|---|---|---|
| A | null | 0.4128394976172101 | null |
| B | 0.5763551718229092 | null | 1.177401941013469 |
| C | null | 1.8705491215734142 | null |

Null in table 3 represents there is not an edge.

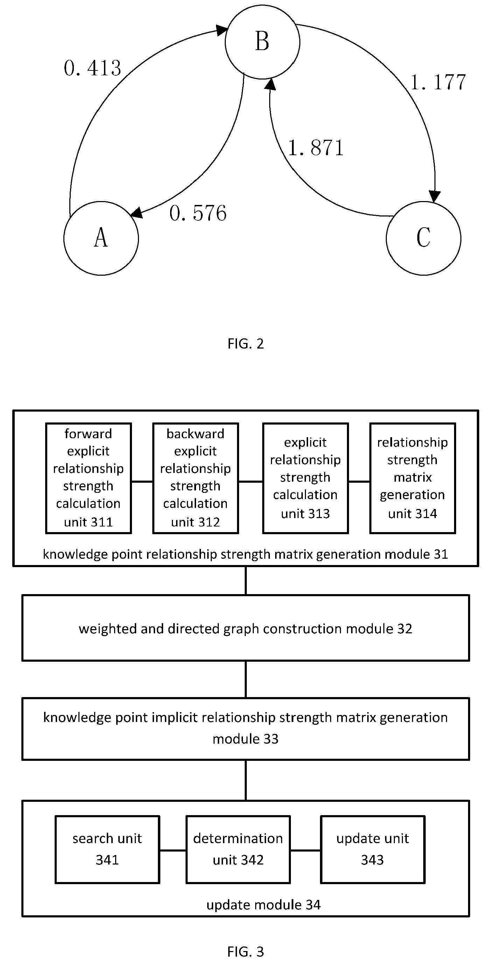

As an alternative embodiment, the weighted and directed graph G may be represented as that in Fig.2. As shown in Fig.2, explicit relationship between knowledge points may be visually represented as edges having weight values, and knowledge points are vertices of the weighted and directed graph G.

S3: calculating knowledge point implicit relationship strength values according to the weighted and directed graph G and generating a knowledge point implicit relationship strength matrix I.

Knowledge point implicit relationship strength is calculated as:

$$f_I(i, j) = \exp(\text{-}C_{ij})$$

Wherein, $f_I(i,j)$ represents the implicit relationship strength value from knowledge point $o_i$ to knowledge point $o_j$, $C_{ij}$ represents the shortest path length from knowledge point $o_i$ to knowledge point $o_j$ in the weighted and directed graph G. If there is not a simple path from knowledge point $o_i$ to knowledge point $o_j$, $f_I(i,j)=0$; the value of implicit relationship strength from a knowledge point to itself is set to 0; the values of implicit relationship strength $f_I(i,j)$ are stored in a matrix to generate a knowledge point implicit relationship strength matrix I.

A Dijkstra algorithm may be used to calculate the shortest simple path length $C_{ij}$, which has fast computing speed, and may realize fast search and improved response speed.

In the method of measuring knowledge point relationship strength according to an embodiment of this disclosure, explicit relationship strength values and implement relationship strength values are calculated using an exponential function and a logarithmic function, a mathematic model is established based on characteristics of those functions and the relationship therebetween, which is advantageous in terms of ingenious conception, simple algorithm and easy implementation.

The knowledge point implicit relationship strength matrix I generated based on implicit relationship strength between knowledge points A, B and C as shown in Table 1 is shown in Table 4.

Table 4. Implicit relationship strength matrix

|   | A | B | C |
|---|---|---|---|
| A | 0 | 0.6617684897238464 | 0.20387638215695592 |
| B | 0.5619428234 919281 | 0 | 0.30807810484000653 |
| C | 0.0865611400 4491779 | 0.1540390524200033 | 0 |

S4: traversing the knowledge point implicit relationship strength matrix I and updating the knowledge point relationship strength matrix M.

In an embodiment, step S4 comprises the following steps:

S41: traversing each element in the implicit relationship strength matrix I;
S42: determining whether $I_{ij}$ is larger than or smaller than $M_{ij}$ ;
S43: if $I_{ij} > M_{ij}$ , reassigning $M_{ij} = I_{ij}$ to update the knowledge point relationship strength matrix M and returning to step S41; if $I_{ij} \leq M_{ij}$ , returning to step S41, until each element of the implicit relationship strength matrix I has been traversed.

Table 5 shows updated values of relationship strength between knowledge points A, B, C of Fig.1

Table 5. Relationship strength matrix

|   | A | B | C |
|---|---|---|---|
| A | 0 | 0.6617684897238 464 | 0.20387638215695 592 |
| B | 0.561942823 4919281 | 0 | 0.30807810484000 653 |
| C | 0.086561140 04491779 | 0.1540390524200 033 | 0 |

It can be seen from Fig.5 that multiple values in Table 2 have been updated by implicit relationship strength values, and all values of relationship strength are within a range of [0, 1).

Embodiment 2

Except for step S3, other steps of this embodiment are the same as that of embodiment 1.

S3: calculating knowledge point implicit relationship strength values according to the weighted and directed graph G and generating a knowledge point implicit relationship strength matrix I in a field.

Knowledge point implicit relationship strength in a field is calculated as:

$$f_I(i,j) = \exp(-C_{ij})$$

wherein $f_I(i,j)$ represents the implicit relationship strength value from knowledge point $o_i$ to knowledge point $o_j$, $C_{ij}$ represents the shortest path length from knowledge point $o_i$ to knowledge point $o_j$ in the weighted and directed graph G. If there is not a simple path from knowledge point $o_i$ to knowledge point $o_j$, $f_I(i,j)=0$; the value of implicit relationship strength from a knowledge point to itself is set to 0; the values of implicit relationship strength $f_I(i,j)$ are stored in a matrix to generate a knowledge point implicit relationship strength matrix I.

A SPFA algorithm is used as the method of calculating the shortest simple path length. This algorithm maintains a queue and source knowledge points are inserted into the queue when the queue is initialized. A knowledge point is taken out of the queue each time to relax its adjacent points; if an adjacent point is relaxed successfully, it is inserted into the queue. The algorithm terminates when the queue is empty. This algorithm is simple, has fast computing speed, and may improve response speed.

Embodiment 3

Except for step S3, other steps of this embodiment are the same as that of embodiment 1.
S3: calculating knowledge point implicit relationship strength values according to the weighted and directed graph G and generating a knowledge point implicit relationship strength matrix I in a field.
Knowledge point implicit relationship strength in a field is calculated as:

$$f_I(i,j) = \exp(-C_{ij})$$

wherein $f_I(i,j)$ represents the implicit relationship strength value from knowledge point $o_i$ to knowledge point $o_j$, $C_{ij}$ represents the shortest path length from knowledge point $o_i$ to knowledge point $o_j$ in the weighted and directed graph G. If there is not a simple path from knowledge point $o_i$ to knowledge point $o_j$, $f_I(i,j)=0$; the value of implicit relationship strength from a knowledge point to itself is set to 0; the values of implicit relationship strength $f_I(i,j)$ are stored in a matrix to generate a knowledge point implicit relationship strength matrix I.

A Floyd-Warshall algorithm is used as the method of calculating the shortest simple path length. With this algorithm, the shortest path between any two points may be calculated. This algorithm may be used in any graphs, including directed graphs, graphs having negative weighted edges, and may obtain the shortest path through finding the shortest sub-paths. This algorithm may be implemented easily, has fast computing speed and improved response speed.

Embodiment 4

Except for S3, other steps of this embodiment are the same as that of embodiment 1.
S3: calculating knowledge point implicit relationship strength according to the weighted and directed graph G and generating a knowledge point implicit relationship strength matrix I in a field.
Knowledge point implicit relationship strength in a field is calculated as:

$$f_I(i,j) = \exp(-C_{ij}),$$

wherein $f_I(i,j)$ represents the implicit relationship strength value from knowledge point $o_i$ to knowledge point $o_j$, $C_{ij}$ represents the shortest path length from knowledge point $o_i$ to knowledge point $o_j$ in the weighted and directed graph G. If there is not a simple path from knowledge point $o_i$ to knowledge point $o_j$, $f_I(i,j)=0$; the value of implicit relationship strength from a knowledge point to itself is set to 0; the values of implicit relationship strength $f_I(i,j)$ are stored in a matrix to generate a knowledge point implicit relationship strength matrix I.

A Bellman-Ford algorithm is used as the method of calculating the shortest simple path length. This algorithm is suitable for single-source shortest path calculation and is easy to program and implement.

In the method of measuring knowledge point relationship strength according to an embodiment of this disclosure, explicit relationship strength values and implement relationship strength values are calculated using an exponential function and a logarithmic function, a mathematic model is established based on characteristics of those functions and the relationship therebetween, which is advantageous in terms of ingenious conception, simple algorithm and easy implementation.

In the method of measuring knowledge point relationship strength according to an embodiment of this disclosure, explicit relationship strength values and implicit relationship strength values are stored in an explicit relationship strength matrix and an implicit relationship strength matrix respectively, and may be accessed conveniently in calculation, which may further improve computing speed.

The method of measuring knowledge point relationship strength comprises calculating explicit relationship strength values for all knowledge points and generating a knowledge point relationship strength matrix M; constructing a weighted and directed graph G according to the knowledge point relationship strength matrix of all knowledge points; calculating knowledge point implicit relationship strength values according to the weighted and directed graph and generating a knowledge point implicit relationship strength matrix I; traversing the knowledge point implicit relationship strength matrix I and updating the knowledge point relationship strength matrix M. The method of measuring knowledge point relationship strength may effectively avoid the problem of lack of an absolute measurable value for the determination of relationship strength, incorrect measurement of relationship strength, or unable to discover some stronger relationship strength in the prior art.

Embodiment 5:

Fig.3 is a structural diagram of a system of measuring knowledge point relationship strength according to an embodiment of this invention. As shown in Fig.3, the system of measuring knowledge point relationship strength comprises:

a knowledge point relationship strength matrix generation module 31 for calculating explicit relationship strength values for all knowledge points and generating a knowledge point relationship strength matrix M.

In an embodiment, the knowledge point relationship strength matrix generation module 31 particularly comprises:

a forward explicit relationship strength calculation unit 311 for calculating knowledge point forward explicit relationship strength values, wherein the knowledge point forward explicit relationship strength is calculated as:

$$f_P(i, j) = \frac{2}{1 + \exp(-\beta\mu)} - 1$$

Wherein, $f_p(i,j)$ is the forward explicit relationship strength value from knowledge point $o_i$ to knowledge point $o_j$, $\mu$ is the number of times knowledge point $o_j$ appears in the related text of knowledge point $o_i$, $\beta$ is a control factor, $0.5 \leq \beta \leq 2$, i,j are non-negative integers, i,j = 1,2, ... n, n is the number of knowledge points.

A backward explicit relationship strength calculation unit 312 for calculating knowledge point backward explicit relationship strength values, wherein the knowledge point backward explicit relationship strength is calculated as:

$$f_N(i, j) = \frac{f_P(j,i)}{\alpha}$$

Wherein, $f_N(i,j)$ is the backward explicit relationship strength value from knowledge point $o_i$ to knowledge point $o_j$, $\alpha$ is an association factor, $1 \leq \alpha \leq 5$, $\alpha$ is a positive integer; $f_p(j, i)$ is the forward explicit relationship strength value from knowledge point $o_j$ to knowledge point $o_i$.

an explicit relationship strength calculation unit 313 for calculating knowledge point explicit relationship strength values according to knowledge point forward explicit relationship strength values and knowledge point backward explicit relationship strength values, wherein the knowledge point explicit relationship strength value is calculated as follows:

$$f_E(i, j) = \frac{\alpha(f_P(i, j) + f_N(i, j))}{1 + \alpha}$$

Wherein, $f_E(i,j)$ is the explicit relationship strength value from knowledge point $o_i$ to knowledge point $o_j$, $f_p(i,j)$ is the forward explicit relationship strength value from knowledge point $o_i$ to knowledge point $o_j$, $f_N(i,j)$ is the backward explicit relationship strength value from knowledge point $o_i$ to knowledge point $o_j$, $\alpha$ is an association factor, $1 \leq \alpha \leq 5$, and $\alpha$ is a positive integer.

A relationship strength matrix generation unit 314 for generating a knowledge point relationship strength matrix M according to the explicit relationship strength values of all knowledge points.

a weighted and directed graph construction module 32 for constructing a weighted and directed graph G according to the knowledge point relationship strength matrix G.

The weighted and directed graph G comprises edges, weights and vertices.

Wherein, edges and weights are set in the following method.

If $M_{ij}>0$, the weight of an edge from knowledge point $o_i$ to knowledge point $o_j$ is set to $-\ln(M_{ij})$; if $M_{ij}=0$, there is not an edge from knowledge point $o_i$ to knowledge point $o_j$ in G, wherein $M_{ij}$ represents explicit relationship strength from knowledge point $o_i$ to knowledge point $o_j$; the weighted and directed graph G has the same vertices with M; the weighted and directed graph G is represented as a matrix.

a knowledge point implicit relationship strength matrix generation module 33 for calculating knowledge point implicit relationship strength values according to the weighted and directed graph G and generating a knowledge point implicit relationship strength matrix I.

Knowledge point implicit relationship strength is calculated as:

$$f_I(i,j) = \exp(\text{-}C_{ij})$$

Wherein, $f_I(i,j)$ represents the implicit relationship strength value from knowledge point $o_i$ to knowledge point $o_j$, $C_{ij}$ represents the shortest path length from knowledge point $o_i$ to knowledge point $o_j$ in the weighted and directed graph G. If there is not a simple path from knowledge point $o_i$ to knowledge point $o_j$, $f_I(i,j)=0$; the value of implicit relationship strength from a knowledge point to itself is set to 0; the values of implicit relationship strength $f_I(i,j)$ are stored in a matrix to generate a knowledge point implicit relationship strength matrix I.

A Dijkstra algorithm may be used to calculate the shortest simple path length $C_{ij}$, which has fast computing speed, and may realize fast search and improved response speed.

an update module 34 for traversing the knowledge point implicit relationship strength matrix I and updating the knowledge point relationship strength matrix M.

In an embodiment, the update module 34 particularly comprises:

a search unit 341 for traversing each element in the implicit relationship strength matrix I;

a determination unit 342 for determining whether $I_{ij}$ is larger than or smaller than $M_{ij}$ ;

an update unit 343 for, if $I_{ij} > M_{ij}$ , reassigning $M_{ij} = I_{ij}$ to update the knowledge point relationship strength matrix M and traversing a next element in the implicit relationship strength matrix I; if $I_{ij} \leq M_{ij}$ , traversing a next element in the implicit relationship strength matrix I, until each element of the implicit relationship strength matrix I has been traversed.

In the system of measuring knowledge point relationship strength according to an embodiment of this disclosure, through using the method of measuring knowledge point relationship strength of this invention, the problem of lack of an absolute measurable value for the determination of relationship strength, incorrect measurement of relationship strength, or unable to discover some stronger relationship strength in the prior art may be effectively avoided.

Obviously, the above embodiments are merely examples given for clear description, but not limitations of this invention. For those skilled in the art, other modifications or variations may be made based on the above description, which will not be and cannot be listed exhaustively herein. These apparent modifications or variations derived are still within the protection scope of this invention.

Those skilled in the art should understand that the embodiments of this application can be provided as method, system or products of computer programs. Therefore, this application can use the forms of entirely hardware embodiment, entirely software embodiment, or embodiment combining software and hardware. Moreover, this application can use the form of the product of computer programs to be carried out on one or multiple storage media (including but not limit to disk memory, CD-ROM, optical memory etc.) comprising programming codes that can be executed by computers.

This application is described with reference to the method, equipment (system) and the flow charts and/or block diagrams of computer program products according to the embodiments of the present invention. It should be understood that each flow and/or block in the flowchart and/or block diagrams as well as the combination of the flow and/or block in the flowchart and/or block diagram can be achieved through computer program commands Such computer program commands can be provided to general computers, special-purpose computers, embedded processors or any other processors of programmable data processing equipment so as to generate a machine, so that a device for realizing one or multiple flows in the flow diagram and/or the functions specified in one block or multiple blocks of the block diagram is generated by the commands to be executed by computers or any other processors of the programmable data processing equipment.

Such computer program commands can also be stored in readable memory of computers which can lead computers or other programmable data processing equipment to working in a specific style so that the commands stored in the readable memory of computers generate the product of command device; such command device can achieve one or multiple flows in the flowchart and/or the functions specified in one or multiple blocks of the block diagram.

Such computer program commands can also be loaded on computers or other programmable data processing equipment so as to carry out a series of operation steps on computers or other programmable equipment to generate the process to be achieved by computers, so that the commands to be executed by computers or other programmable equipment achieve the one or multiple flows in the flowchart and/or the functions specified in one block or multiple blocks of the block diagram.

Although preferred embodiments of this application are already described, once those skilled in the art understand basic creative concept, they can make additional modification and alteration for these embodiments. Therefore, the appended claims are intended to be interpreted as encompassing preferred embodiments and all the modifications and alterations within the scope of this application.

**Claims**

1. A method for measuring knowledge point relationship strength, **characterized in** comprising the following steps:

   calculating explicit relationship strength values for all knowledge points and generating a knowledge point relationship strength matrix M;
   constructing a weighted and directed graph G according to the knowledge point relationship strength matrix of all knowledge points;
   calculating knowledge point implicit relationship strength values according to the weighted and directed graph and generating a knowledge point implicit relationship strength matrix I;
   traversing the knowledge point implicit relationship strength matrix I and updating the knowledge point relationship strength matrix M.

2. The method for measuring knowledge point relationship strength according to claim 1, **characterized in that** the process of calculating explicit relationship strength values for all knowledge points and generating a knowledge point relationship strength matrix M comprises the following steps:

   calculating knowledge point forward explicit relationship strength values;
   calculating knowledge point backward explicit relationship strength values;
   calculating knowledge point explicit relationship strength values according to the knowledge point forward explicit relationship strength values and the knowledge point backward explicit relationship strength values;
   according to the knowledge point explicit relationship strength values, generating a knowledge point relationship strength matrix M.

3. The method for measuring knowledge point relationship strength according to claim 2, **characterized in that** the calculation method of knowledge point forward explicit relationship strength values is:

$$f_P(i, j) = \frac{2}{1 + \exp(-\beta\mu)} - 1$$

Wherein, $f_p(i,j)$ is the forward explicit relationship strength value from knowledge point $o_i$ to knowledge point $o_j$, $\mu$ is the number of times knowledge point $o_j$ appears in related text of knowledge point $o_i$, $\beta$ is a control factor, $0.5 \leq \beta \leq 2$, i,j are non-negative integers, i, j = 1,2, ..., n, n is the number of knowledge points; or the calculation method of knowledge point backward explicit relationship strength values is:

$$f_N(i, j) = \frac{f_P(j, i)}{\alpha}$$

Wherein, $f_N(i,j)$ is the backward explicit relationship strength value from knowledge point $o_i$ to knowledge point $o_j$, $\alpha$ is an association factor, $1 \leq \alpha \leq 5$, $\alpha$ is a positive integer; $f_p(j,i)$ is the forward explicit relationship strength value from knowledge point $o_j$ to knowledge point $o_i$.

4. The method for measuring knowledge point relationship strength according to any of claim 1 to claim 3, **characterized in that** the calculation method of knowledge point explicit relationship strength values is:

$$f_E(i, j) = \frac{\alpha(f_P(i, j) + f_N(i, j))}{1 + \alpha}$$

Wherein, $f_E(i,j)$ is the explicit relationship strength value from knowledge point $o_i$ to knowledge point $o_j$, $f_p(i,j)$ is forward explicit relationship strength from knowledge point $o_i$ to knowledge point $o_j$, $f_N(i,j)$ is the backward explicit relationship strength value from knowledge point $o_i$ to knowledge point $o_j$, $\alpha$ is an association factor, $1 \leq \alpha \leq 5$, and $\alpha$ is a positive integer.

5. The method for measuring knowledge point relationship strength according to any of claim 1 to claim 4, **characterized in that** the weighted and directed graph G comprises edges, weights and vertices, wherein, the method of setting edges and weights comprises:

if $M_{ij} > 0$, setting a weight of an edge from knowledge point $o_i$ to knowledge point $o_j$ in the weighted and directed graph G to $-\ln(M_{ij})$; if $M_{ij} = 0$, there is an edge from knowledge point $o_i$ to knowledge point $o_j$ in the weighted and directed graph G, wherein $M_{ij}$ represents the explicit relationship strength value from knowledge point $o_i$ to knowledge point $o_j$;
the vertices of the weighted and directed graph G are the same as the vertices in M.

6. The method for measuring knowledge point relationship strength according to any of claim 1 to claim 5, **characterized in that** the weighted and directed graph G is represented as a matrix.

7. The method for measuring knowledge point relationship strength according to any of claim 1 to claim 6, **characterized in that**, the calculation method of knowledge point implicit relationship strength values is:

$$f_I(i, j) = \exp(-C_{ij})$$

Wherein, $f_I(i,j)$ is the implicit relationship strength value from knowledge point $o_i$ to knowledge point $o_j$, $C_{ij}$ represents the shortest simple path length from knowledge point $o_i$ to knowledge point $o_j$ in the weighted and directed graph G; if there is not a simple path from knowledge point $o_i$ to knowledge point $o_j$, $f_I(i,j) = 0$; the value of implicit relationship strength from a knowledge point to itself is set to 0;
values of implicit relationship strength $f_I(i,j)$ are stored in a matrix to generate a knowledge point implicit relationship strength matrix I.

8. The method for measuring knowledge point relationship strength according to any of claim 1 to claim 7, **characterized in that** the process of traversing the knowledge point implicit relationship strength matrix I and updating the knowledge point relationship strength matrix M comprises the following steps:

traversing each element of the implicit relationship strength matrix I;
determining whether $I_{ij}$ is larger than $M_{ij}$;
if $I_{ij} > M_{ij}$, reassigning $M_{ij}$ as $M_{ij} = I_{ij}$ and proceeding to the next element of the implicit relationship strength matrix I after updating the knowledge point relationship strength matrix M;
if $I_{ij} < M_{ij}$, proceeding to the next element of the implicit relationship strength matrix I directly, until all elements of the implicit relationship strength matrix I are traversed.

9. The method for measuring knowledge point relationship strength according to claim 7 or claim 8, **characterized in that** the shortest simple path length $C_{ij}$ is calculated using a Dijkstra algorithm, a SPFA algorithm, a Floyd-Warshall algorithm or a Bellman-Ford algorithm.

10. The method for measuring knowledge point relationship strength according to any of claim 3 to claim 9, **characterized in that** the control factor $\beta = 1$ or the association factor $\alpha = 2$.

11. A system for measuring knowledge point relationship strength, **characterized in** comprising:

   a knowledge point relationship strength matrix generation module for calculating explicit relationship strength values for all knowledge points and generating a knowledge point relationship strength matrix M;
   a weighted and directed graph construction module for constructing a weighted and directed graph G according to the knowledge point relationship strength matrix of all knowledge points;
   a knowledge point implicit relationship strength matrix generation module for calculating knowledge point implicit relationship strength values according to the weighted and directed graph and generating a knowledge point implicit relationship strength matrix I;
   an update module for traversing the knowledge point implicit relationship strength matrix I and updating the knowledge point relationship strength matrix M.

12. The system for measuring knowledge point relationship strength according to claim 11, **characterized in that** the knowledge point relationship strength generation module comprises:

   a forward explicit relationship strength calculation unit for calculating knowledge point forward explicit relationship strength values;
   a backward explicit relationship strength calculation unit for calculating knowledge point backward explicit relationship strength values;
   an explicit relationship strength calculation unit for calculating knowledge point explicit relationship strength values according to the knowledge point forward explicit relationship strength values and the knowledge point backward explicit relationship strength values;
   a knowledge point relationship strength matrix generation unit for, according to the knowledge point explicit relationship strength values, generating a knowledge point relationship strength matrix M.

13. The system for measuring knowledge point relationship strength according to claim 12, **characterized in that**, the forward explicit relationship strength calculation unit calculates knowledge point forward explicit relationship strength values according to the following equation:

$$f_P(i,j) = \frac{2}{1 + \exp(-\beta\mu)} - 1$$

Wherein, $f_p(i,j)$ is the forward explicit relationship strength value from knowledge point $o_i$ to knowledge point $o_j$, $\mu$ is the number of times knowledge point $o_j$ appears in related text of knowledge point $o_i$, $\beta$ is a control factor, $0.5 \leq \beta \leq 2$, i,j are non-negative integers, i,j = 1,2, ..., n, n is the number of knowledge points;
or
the backward explicit relationship strength calculation unit calculates knowledge point backward explicit relationship strength values according to the following equation:

$$f_N(i,j) = \frac{f_P(j,i)}{\alpha}$$

Wherein, $f_N(i,j)$ is the backward explicit relationship strength value from knowledge point $o_i$ to knowledge point $o_j$, $\alpha$ is an association factor, $1 \leq \alpha \leq 5$, $\alpha$ is a positive integer; $f_p(j,i)$ is the forward explicit relationship strength value from knowledge point $o_j$ to knowledge point $o_i$.

14. The system for measuring knowledge point relationship strength according to any of claim 11 to claim 13, **characterized in that** the knowledge point relationship strength matrix generation module calculates knowledge point explicit relationship strength values according to the following equation:

$$f_E(i,j) = \frac{\alpha(f_P(i,j) + f_N(i,j))}{1 + \alpha}$$

Wherein, $f_E(i,j)$ is the explicit relationship strength value from knowledge point $o_i$ to knowledge point $o_j$, $f_p(i,j)$ is the forward explicit relationship strength value from knowledge point $o_i$ to knowledge point $o_j$, $f_N(i,j)$ is the backward explicit relationship strength value from knowledge point $o_i$ to knowledge point $o_j$, $\alpha$ is an association factor, $1 \leq \alpha \leq 5$, and $\alpha$ is a positive integer.

15. The system for measuring knowledge point relationship strength according to any of claim 11 to claim 14, **characterized in that** the weighted and directed graph G comprises edges, weights and vertices,
wherein, the method of setting edges and weights comprises: if $M_{ij} > 0$, a weight of an edge from knowledge point $o_i$ to knowledge point $o_j$ in the weighted and directed graph G is set to $-\ln(M_{ij})$; if $M_{ij} = 0$, there is an edge from knowledge point $o_i$ to knowledge point $o_j$ in the weighted and directed graph G, wherein $M_{ij}$ represents explicit relationship strength from knowledge point $o_i$ to knowledge point $o_j$;
the vertices of the weighted and directed graph G are the same as the vertices in M.

16. The system for measuring knowledge point relationship strength according to any of claim 11 to claim 15, **characterized in that** the weighted and directed graph G is represented as a matrix.

17. The system for measuring knowledge point relationship strength according to any of claim 12 to claim 16, **characterized in that** the knowledge point implicit relationship strength matrix generation module calculates knowledge point implicit relationship strength values according to the following equation:

$$f_I(i, j) = \exp(-C_{ij})$$

Wherein, $f_I(i,j)$ is the implicit relationship strength value from knowledge point $o_i$ to knowledge point $o_j$, $C_{ij}$ represents the shortest simple path length from knowledge point $o_i$ to knowledge point $o_j$ in the weighted and directed graph G; if there is not a simple path from knowledge point $o_i$ to knowledge point $o_j$, $f_I(i,j) = 0$; the value of implicit relationship strength from a knowledge point to itself is set to 0;
values of implicit relationship strength $f_I(i,j)$ are stored in a matrix to generate a knowledge point implicit relationship strength matrix I.

18. The system for measuring knowledge point relationship strength according to any of claim 11 to claim 17, **characterized in that** the update module comprises:

a search unit for traversing each element of the implicit relationship strength matrix I;
a determination unit for determining whether $I_{ij}$ is larger than $M_{ij}$;
an update unit for, if $I_{ij} > M_{ij}$, reassigning $M_{ij}$ as $M_{ij} = I_{ij}$ and proceeding to the next element of the implicit relationship strength matrix I after updating the knowledge point relationship strength matrix M; if $I_{ij} < M_{ij}$, proceeding to the next element of the implicit relationship strength matrix I directly, until all elements of the implicit relationship strength matrix I are traversed.

19. The system for measuring knowledge point relationship strength according to any of claim 11 to claim 18, **characterized in that** the shortest simple path length $C_{ij}$ is calculated using a Dijkstra algorithm, a SPFA algorithm, a Floyd-Warshall algorithm or a Bellman-Ford algorithm.

20. The system for measuring knowledge point relationship strength according to any of claim 13 to claim 19, **characterized in that** the control factor $\beta = 1$ or the association factor $\alpha = 2$.

21. One or more computer readable mediums having stored thereon computer-executable instructions that when executed by a method of measuring knowledge point relationship strength, the method comprising:

calculating explicit relationship strength for all knowledge points and generating a knowledge point relationship strength matrix M;
constructing a weighted and directed graph G according to the knowledge point relationship strength matrix of all knowledge points;
calculating knowledge point implicit relationship strength values according to the weighted and directed graph and generating a knowledge point implicit relationship strength matrix I;
traversing the knowledge point implicit relationship strength matrix I and updating the knowledge point relation-

ship strength matrix M.

FIG. 1

FIG. 2

FIG. 3

# INTERNATIONAL SEARCH REPORT

| International application No. |
| --- |
| PCT/CN2013/088625 |

**A.  CLASSIFICATION OF SUBJECT MATTER**

G06F 17/30 (2006.01) i

According to International Patent Classification (IPC) or to both national classification and IPC

**B.  FIELDS SEARCHED**

Minimum documentation searched (classification system followed by classification symbols)

IPC: G06G; H04L

Documentation searched other than minimum documentation to the extent that such documents are included in the fields searched

Electronic data base consulted during the international search (name of data base and, where practicable, search terms used)

MOABS; CNMED; CPRSABS; CNABS; TWMED; HKABS; TWABS: directly, relationship, indirectly, apparent, unapparent

**C.  DOCUMENTS CONSIDERED TO BE RELEVANT**

| Category* | Citation of document, with indication, where appropriate, of the relevant passages | Relevant to claim No. |
| --- | --- | --- |
| X | CN 102622363 A (HON HAI PRECISION IND CO., LTD.) 01 August 2012 (01.08.2012) see claims 1-7, description, pages 3 and 4 | 1, 11, 19, 21 |
| A | CN 102622363 A (HON HAI PRECISION IND CO., LTD.) 01 August 2012 (01.08.2012) see claims 1-7, description, pages 3 and 4 | 2-10, 12-18, 20 |
| A | CN 102385629 A (SHANDONG LANGCHAO FINANCIAL INFORMATION) 21 March 2012 (21.03.2012) see the whole document | 1-21 |

☐ Further documents are listed in the continuation of Box C.          ☒ See patent family annex.

| *     Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"document member of the same patent family |

| Date of the actual completion of the international search | Date of mailing of the international search report |
| --- | --- |
| 19 May 2014 | 10 July 2014 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>HAN, Xianping<br><br>Telephone No. (86-10) 62411841 |

Form PCT/ISA /210 (second sheet) (July 2009)

### INTERNATIONAL SEARCH REPORT
Information on patent family members

| | International application No. |
|---|---|
| | PCT/CN2013/088625 |

| Patent Documents referred in the Report | Publication Date | Patent Family | Publication Date |
|---|---|---|---|
| CN 102622363 A | 01 August 2012 | None | |
| CN 102385629 A | 21 March 2012 | CN102385629 B | 03 April 2012 |

Form PCT/ISA /210 (patent family annex) (July 2009)